# EUROPEAN PATENT APPLICATION

(11) **EP 4 803 291 A1**
(43) Date of publication of application: **09.09.2026**
(21) Application number: 25161431.9
(22) Date of filing: 03.03.2025
(51) Int. Cl.: B29C 70/44

(54) **PRESSURE VESSEL AND METHODS FOR FORMING A COMPOSITE PART**

(71) Applicant: Corebon AB, 213 76 Malmö (SE)
(72) Inventor: Frogner, Kenneth, 24292 Hörby (SE); Wiberg, Oscar, 26133 Landskrona (SE); Kirkhorn, Lanny, 22649 Lund (SE)
(74) Representative: Ström & Gulliksson AB

(57) **Abstract**

Disclosed is a pressure vessel for producing a composite part using a temperature cycled mold. The pressure vessel (1) comprises a first chamber (10) comprising a first cavity (11) and a second chamber (20) comprising a second cavity (21), wherein the first cavity (11) and the second cavity (21) are fluidly sealable with respect to each other at an interface (30) between the first chamber (10) and the second chamber (20). The pressure vessel (1) further comprises a replaceable tool (2), which is configured to be arranged in said interface (30). The vessel (1) further comprises a first pressurizing inlet (12) arranged in the first chamber (10) and configured to pressurize the first cavity (11) with a first pressurizing fluid, and a second pressurizing inlet (22) arranged in the second chamber (20) and configured to pressurize the second cavity (21) with a second pressurizing fluid, wherein the pressure in the first chamber (10) is substantially the same as in the second chamber (20).

## Description

### TECHNICAL FIELD

The present invention relates in general to a pressure vessel for incorporating a replaceable tool for forming a composite part, a method of forming a composite part with the pressure vessel, and a system comprising a pressure vessel for forming a composite part.

### BACKGROUND

In the field of composite part manufacturing, composite materials, typically in the form of a polymer matrix reinforced with carbon or glass fibers, are laid up in molds or on tooling. These assemblies are then placed inside an autoclave whose primary function is to cure or consolidate the composite materials under certain conditions of heat and pressure. Explained briefly, the autoclave creates a closed environment which is heated to a certain temperature determined by the matrix used. Additionally, the autoclave is pressurized, which helps in reducing voids or air bubbles within the laid up composite materials. The heating and pressurizing may be performed separately or simultaneously.

A major drawback with autoclaves is related to their relatively slow processes for heating of the molds and composite materials as well as cooling of the produced composite parts. The process is also associated with large energy consumption. Attempts have been made in the prior art with the aim of speeding up the cycle times in the manufacturing of composite parts. However, they all have certain drawbacks when it comes to curing cycle speed. Furthermore, most proposed alternatives to the autoclave introduce new types of disadvantages associated for instance with versatility of the mold setup, high capex costs or inferior part quality. It is understood that there is room for improvements.

### SUMMARY

An object of the present invention is to solve or at least mitigate the problems related to prior art. This object is achieved by means of the technique set forth in the appended independent claims; preferred embodiments being defined in the related dependent claims.

According to a first aspect of the invention, there is provided a pressure vessel for incorporating a replaceable tool for forming a composite part. The pressure vessel comprises a first chamber comprising a first cavity and a second chamber comprising a second cavity. The first and second cavities are fluidly sealable with respect to each other at an interface between the first chamber and the second chamber. A replaceable tool is configured to be arranged in said interface. The pressure vessel further comprises a first pressurizing inlet arranged in the first chamber, configured to pressurize the first cavity with a first pressurizing fluid, and a second pressurizing inlet arranged in the second chamber, configured to pressurize the second cavity with a second pressurizing fluid, wherein the pressure in the first chamber is substantially the same as that in the second chamber.

In an embodiment, the pressure vessel further comprises a first outlet arranged in the first chamber and configured to allow the pressurizing fluid to exit the first cavity, and a second outlet arranged in the second chamber and configured to allow the pressurizing fluid to exit the second cavity.

In another embodiment of the invention, the pressure vessel further comprises a coolant inlet arranged in the second chamber and configured to introduce a cooling media into the second cavity. This cooling media may contribute to the cooling of the tool surface in the second cavity. The pressure vessel is configured so that no coolant, such as moisture, moisturized air, water droplets, water molecules, etc, is transported from the second chamber to the first chamber. The pressure vessel may further comprise a drainage arranged in the second chamber and configured to allow the cooling media to drain from the second cavity.

In a yet another embodiment, the pressure vessel further comprises an adapter element configured to be arranged in the interface between the first chamber and the second chamber, wherein the interface may comprise a receiving means configured to receive the replaceable tool and/or the adapter element, wherein the replaceable tool and/or the adapter element may be releasably connectable to said receiving means. Preferably, at least one of the first chamber and the second chamber comprise an inner rim, wherein the inner rim constitutes the receiving means of the interface between the first chamber and the second chamber.

In an embodiment, the pressure vessel further comprises at least one vacuum duct. For example, the at least one vacuum duct may be arranged in communication with the interface between the first chamber and the second chamber.

In a further embodiment, the pressure vessel further comprises a membrane configured to cover at least parts of a forming side of the replaceable tool which is configured to receive a material to be formed into a composite part.

In an embodiment, the pressure vessel comprises a sub-layer between the membrane and the forming side of the replaceable tool.

Preferably, the at least one vacuum duct is arranged to draw vacuum between the membrane and the replaceable tool.

In an embodiment, the first cavity of the first chamber is configured to be in fluidic contact with the membrane covering at least parts of the forming side of the replaceable tool which is configured to receive material to be formed into a composite part.

In a yet an embodiment, the second chamber is in fluidic contact with a heat generating side of the replaceable tool, which is opposite to the forming side of the replaceable tool which is configured to receive material to be formed.

In another embodiment, the pressure vessel is configured to be opened in such a way as to allow the material to be inserted (or charged) into the first chamber and/or for the composite part to be taken out (or discharged) from the first chamber. For example, the pressure vessel may be openable at the interface between the first chamber and the second chamber.

In an embodiment, the pressure vessel is configurable between an open position and a closed position.

In yet an embodiment, the first chamber and the second chamber are separable from each other. For example, the first chamber and the second chamber may be separable from each other at the interface between the first chamber and the second chamber.

In an embodiment, at least one of the first chamber and the second chamber comprises an outer rim, said outer rim being configured to provide a fluid-tight connection between the first chamber and second chamber when the pressure vessel is in the closed position.

In a further embodiment, the pressure vessel comprises a ventilation inlet between the chambers, wherein said inlet is configured to allow the flow of air and/or gas from the first chamber into the second chamber. The inlet preferably does not allow the back flow of air and/or gas into the first chamber from the second chamber.

In an embodiment, the pressure vessel comprises a pressure regulation inlet configured to regulate the pressure between the first and second chambers, such as maintaining substantially equal pressure between said chambers. In an embodiment, said pressure regulation inlet is configured to release the pressure out of the pressure vessel. In an example, such an inlet may comprise a filter (such as a centrifugation filter) configured to, for example, filter air and/or liquid when pressure is released. A rapid release may lead to small moisture particles to be released as well, which preferably are not released with the air, and preferably are re-introduced or at least not released into the atmosphere. In one example, the liquid is a cooling medium, such as an aqueous based cooling medium, comprising anti-algae, anti-corrosion, or combinations thereof. Examples include glycol or emulsions.

In a yet embodiment, the pressure vessel comprises a differential pressure regulator configured to regulate the pressure by adjusting or eliminating pressure variations and enhancing temperature control. In an example, rapid pressure changes are attended to via at least one expansion vessel which may be connected between the chambers or to a nominal pressure reference.

According to a further aspect of the invention, a method for producing a composite part is provided. The method comprises a step of providing a pressure vessel according to what has been described above. Further the method comprises placing a fiber and matrix material, preferably a plastic material on the membrane of the replaceable tool, closing the pressure vessel and applying a consolidation pressure on the material to be processed. The method also comprises a step of heating the replaceable tool containing the material according to a pre-determined time-temperature profile to consolidate and/or cure the material to form the composite part.

Alternatively, a material to be pre-formed, such as dry fibers with or without a matrix, for example with a binding material, are placed on the replaceable tool following the steps described above to give a pre-form to become a cured or consolidated composite material according to the present invention. In such a case, the method may comprise an additional step of placing the formed composite material into another form and adding to it (e.g., by injection) a material, such as a plastic material.

In an embodiment, before the step of applying a consolidation pressure on the material to be processed, the method may further comprise a step of applying vacuum pressure on the material.

In a further embodiment, the method may further comprise a step of cooling at least a part of the replaceable tool and/or the produced part, and demolding the part from the replaceable tool.

In another embodiment, a method of forming a composite part is provided. The method comprises a step of providing a pressure vessel according to any of the embodiments described herein. Further, the method comprises placing a fiber material to be processed on the contact surface of the membrane of the replaceable tool, closing the pressure vessel, applying a vacuum pressure and infusing the fiber material with a plastic material, the plastic material thereby forming part of the material to be processed. The method also comprises a step of heating the replaceable tool containing both the fiber and plastic material according to a pre-determined time-temperature profile to form the composite part.

Alternatively, dry fibers and a binding material are placed on the membrane, closing the pressure vessel, applying a vacuum pressure and infusing the fiber material with a plastic material, the plastic material thereby forming part of the material to be processed.

In an embodiment, the steps of heating, such as resistive or inductively heating, and applying pressure on infusing the plastic material, on the replaceable tool occur simultaneously. Liquid heating methods may also be employed.

In yet an embodiment, the method may further comprise a step of cooling at least a part of the replaceable tool and/or the produced part, and demolding the part from the replaceable tool.

### BRIEF DESCRIPTION OF THE DRAWINGS

By way of example, embodiments of the present invention will now be described with reference to the accompanying drawings, in which:
Fig. 1 is a schematic block cross view of a pressure vessel according to an embodiment,
Fig. 2 is a schematic cross view of a replaceable tool and a material according to an embodiment,
Fig. 3 is a schematic cross view of a membrane attached to a replaceable tool according to an embodiment,
Fig. 4 is a schematic block cross view of a pressure vessel according to an embodiment,
Fig. 5 is a schematic block cross view of a pressure vessel according to an embodiment,
Fig. 6a is a schematic block diagram showing a method for forming a composite part according to an embodiment,
Fig. 6b is a schematic view of part of a method for forming a composite part according to an embodiment,
Fig. 6c is a schematic cross view of a method for forming a composite part according to an embodiment,
Fig. 7 is a schematic block diagram of a system assembly comprising the pressure vessel according to an embodiment,
Fig. 8 is a schematic cross view of a pressure vessel in the open position according to an embodiment,
Fig. 9 is a schematic cross view of a pressure vessel in the closed position according to an embodiment.

### DETAILED DESCRIPTION OF EMBODIMENTS

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

For the avoidance of doubt, the term composite part refers to parts prepared from composite materials, such as materials which are produced from two or more constituent materials. Traditionally, these constituent materials have notably dissimilar chemical or physical properties and are merged to create a material with properties unlike the individual elements. In other words, a composite material is any material made by combining two or more materials in a structure whereby materials remain separate. An advantage of such materials is their desired properties, including high stiffness, high compressive strength, tensile strength, flexibility and hardness, as well as low density and forming properties.

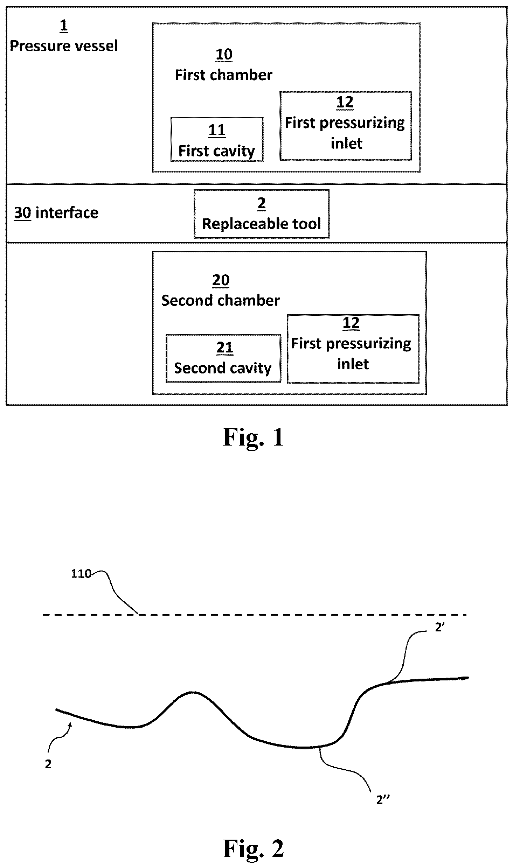

With reference to Fig. 1, the pressure vessel 1 comprises a first chamber 10 and a second chamber 20, wherein the first chamber 10 comprises a first cavity 11 and the second chamber 20 comprises a second cavity 21. The first cavity 11 and the second cavity 21 are extending along the first chamber 10 and second chamber 20, respectively. The chambers 10, 20 and cavities 11, 21 may be dimensioned and shaped into the desired shape of the composite part 3 to be formed.

The first chamber 10 and the second chamber 20 are fluidly sealable with respect to each other at an interface 30, which is located between the first chamber 10 and the second chamber 20. The term fluidly sealable refers to the configuration of sealing fluids, i.e., wherein the fluids are sealed in contained locations. Sealing fluids has the advantage of avoiding spillage of fluids or the transfer of them into undesired locations.

As illustrated in Fig. 1, the replaceable tool 2 may be configured to be arranged in interface 30. The replaceable tool 2 may be thin-walled metal or CF-composite tools, also known as shell tools. In some examples, the replaceable tool 2 may be a solid tool. In another example, it is a shell tool with support structure on the back side, such as a rib structure, rods, or any other supporting geometry, including 3d-printed structures. The replaceable tool 2 can have virtually any shape and contain any number of cavities. A shell tool is preferably suitable to be used for forming large composite parts or when deep cavities are required, due to its low weight.

In some embodiments, the replaceable tool 2 is at least partially made of a material chosen from a group consisting of carbon fiber composite materials or metals. The material is preferably a material with significant electrical conductivity to be able to be heated by induction, for example more than 1 Siemens/meter. If the replaceable tool 2 is made of a carbon fiber composite material, then the tool may be a carbon fibre reinforced plastic (CFRP). The fiber reinforcement can also be a hybrid of carbon and another type of technical fiber such as glass fiber, basalt fiber etc.. The fibers can be continuous or chopped, unidirectional plies or multi-axial layups or randomly oriented fibers. In some embodiment the fibers are woven. Different types of fibers and layups have their particular advantages, such as stiffness, coefficient of thermal expansion (CTE), electrical and thermal properties, and preferably a carbon fiber with high thermal conductivity such as pitch carbon fiber or high thermal conductivity polyacrylic nitrile carbon fibers is used to simplify uniform temperature generation. Similar choice applies to the matrix material, where easy and low temperature processing is advantageous, as well as high temperature resistance and high glass transition temperature. Also, low CTE and long durability or service life are important properties. Examples of matrices can be epoxies, bismaleimides, polyimides, benzoxazines, phenolics and also silicones, and thermoplastics or semicrystallines such as polyetereterkotone (PEEK), polyphenylenesulfide (PPS) etc..

If the replaceable tool 2 is made at least partially of metal, it may typically be in steel, aluminum, or an alloy such as Invar. Also nickel or coated steel is common, but any metal works and might be beneficial depending on the particular application. An advantage of having a replaceable tool 2 made of Invar is that it has a low coefficient of thermal expansion and long tool life. A replaceable tool 2 made of nickel provides a lightweight tool with good surface quality on the contact surface using additive methods and with long service life. An advantage of having a replaceable tool 2 made of aluminium and steel is that there are many suppliers, relatively low cost and long service life. An advantage of having a replaceable tool 2 made of carbon fiber composite is that it provides a lightweight tool, including large and complex geometries with additive methods, being relatively cost efficient and having a low coefficient of thermal expansion.

A purpose of using a metal or a carbon fiber composite material is that the replaceable tool 2 would be able to be heated inductively. Basically, the replaceable tool 2 would be a susceptor, meaning that it would have the ability to absorb electromagnetic energy and convert it to heat.

As illustrated in Fig. 1, the pressure vessel 1 may further comprise a first pressurizing inlet 12 arranged in the first chamber 10, wherein this first pressurizing inlet 12 may be configured to pressurize the first cavity 11 with a first pressurizing fluid. The pressure vessel 1 may also comprise a second pressurizing inlet 22 arranged in the second chamber 20, wherein the second pressurizing inlet 22 may be configured to pressurize the second cavity 21 with a second pressurizing fluid. In some examples, the pressure in the first chamber 10 is substantially the same as in the pressure in the second chamber 20. An advantage is that the small pressure differential (i.e., substantially small pressure differential) between said chambers 10, 20 does not deform the replaceable tool 2 when forming the composite part 3 in the replaceable tool 2.

The pressure in the first cavity 11 may be referred to as P1 while the pressure in the second cavity 21 may be referred to as P2.

The term pressurize refers to the application of pressure into an environment, such as applying pressure above atmospheric levels.

The term pressurizing fluid, which may also be referred to as pressurized fluid, refers to typically to a gas, such as air or nitrogen aimed to create a compaction force acting on the part to be produced. The pressurized fluid may reach pressures up to 50 bars or more, but in many cases 10 bars or lower is sufficient to achieve the desired part quality. The pressurized fluid may be introduced at an elevated temperature.

The term substantially the same refers to the pressure in the first chamber 10 being the same or about the same as in the second chamber 20. For example, the pressure in the second chamber (i.e., P2) may be within +/- margin of the pressure in the first chamber (i.e., P1), wherein the margin may be determined by a skilled person in view of the specific implementations. For example, the margin may be an absolute value or a percentage of the pressure in the first chamber. In an example, the pressure difference may be related to the thickness of the replaceable tool 2, in particular when the size of the tool 2 is expanding. In one example, the margin may be in the range of 0.01 to 5, such as 0.03 to 0.5, including 0.05 to 0.1. In one example, a margin of 1 bar may be used for a vessel of 10 ton/m² thickness.

The pressure vessel may further comprise a ventilation inlet 50 (not shown) between the chambers, wherein said inlet 50 is configured to allow the flow of air and/or gas from the first chamber 10 into the second chamber 20. The inlet 50 preferably does not allow the back flow of air and/or gas into the first chamber 10 from the second chamber 20, wherein the air and/or gas may be atmospheric air or an inert gas, such as nitrogen. The use of nitrogen gas is advantageous in the event of a risk for a spark or fire outbreak. The air and/or gas may be around, above or under room temperature. In one example, the air and/or gas is above room temperature, wherein the air and/or gas may be heated by appropriate heating source including those within the vessel, or fan heating prior or during flow into the pressure vessel.

In an embodiment, the pressure vessel comprises a pressure regulation inlet 51 (not shown) configured to regulate the pressure between the first and second chambers, such as maintaining substantially equal pressure between said chambers. In an embodiment, said pressure regulation inlet 51 is configured to release the pressure out of the pressure vessel. In an example, such an inlet may comprise a filter (such as a centrifugation filter) configured to filter out the released air and/or liquid out of the pressure vessel.

In a yet embodiment, the pressure vessel comprises a differential pressure regulator 52 (not shown) configured to regulate the pressure by adjusting or eliminating pressure variations and enhancing temperature control. In an example, rapid pressure changes are attended to via at least one expansion vessel which may be connected between the chambers or to a nominal pressure reference.

With reference to Fig. 2, as seen from a cross-section view, the replaceable tool 2 has a body having a contact surface and an outer surface. In an embodiment, the contact surface is the forming side 2', and the outer surface is the heat generating side 2". The forming side 2' is an inner region of the replaceable tool 2 configured to be facing a material 110 which is to be formed into composite part 3. In some examples, the replaceable tool 2 may be seen as a body having a cavity which is dimensioned and shaped into the desired shape of the composite part 3 to be formed. The forming side 2' of the replaceable tool 2 is configured to receive the material 110. In some examples, a composite part 3 to be formed in the replaceable tool 2 is a car door, or any other composite part. The replaceable tool 2 may contain more than one cavity and thereby it may form several components in a single cycle, still referred to as material 110 being transformed into a composite part 3.

The material 110 is typically a composite material based on a mix of fiber material and polymeric material. As a non-limiting example, the material may contain multiple fiber layers, e.g. 10 layers of glass or carbon fibers embedded in a thermoset or thermoplastic matrix, such as resin. The material can be made of a woven web of fibers, or for example chopped fibers, organized or randomly oriented. Optionally, the web is nonwoven. The matrix may be for example epoxy, polyester (PET), polypropylene (PP), polyamide (PA), polycarbonate (PC) or it can be a semicrystalline thermoplastic material such as polyphenylenesulfide (PPS) or polyetereterketone (PEEK) etc. The fibers can also be of any other technical textile, such as flax fibers, aramid, ultra-high molecular weight polyethylene, etc. As a non-limiting example, glass fibers may be used as a reinforcement in a polycarbonate based matrix. The composite materials can also be built by hybrid fiber reinforcement, for example glass fiber and carbon fiber.

The material 110 may also be dry fiber material such as woven or non-woven materials including paper, pulp, cellulose-based materials, polyester, polypropylene (PP), nylon, acrylic, wool fibers, or combinations thereof.

The binding material may be any material or substance that holds or draws other materials together to form a cohesive whole mechanically, chemically, by adhesion or cohesion and includes glue, adhesive and thickening material.

The composite part 3 is formed in the replaceable tool 2 by heating the material 110 to be processed under pressure. Put differently, when the material 110 is heated by the heated replaceable tool 2, the composite part 3 is being formed, either because there is a matrix material already there when the process starts, or because it is added during the process using an infusion process. Preferably, the material 110 is processed under vacuum pressure to reduce the risk of voids, pin holes or insufficient wet out.

In an embodiment, the membrane 4 comprises a heat inducing element such as the material 110 is heated by the heat from the heat generating side 2'' of the replaceable tool and/or the heat inducing element of the membrane 4 either separately or simultaneously.

In an embodiment, the first chamber is heated from the heat induced by the membrane 4. In a further embodiment, the second chamber is not heated.

For the avoidance of doubt, vacuum pressure according to the present invention includes a pressure equal or under 100 mbar, such as under 100 mbar.

In an embodiment, the heat generating side 2'' is the part of the replaceable tool 2 to which heat is induced. It is to be understood that heat may be induced in at least a part of the replaceable tool 2 and not necessarily over the whole surface of the heat generating side 2''.

In some embodiments, heat is induced through inductive heating, resistive heating, liquid heating (such as hot water, oil, or combination thereof), or combinations thereof.

In an embodiment, such as that where inductive heating is used, at least a part (or subregion) of the replaceable tool 2 comprises at least a soft magnetic element and/or at least an electrically conductive element arranged at predetermined regions along at least one coil. Typical examples of soft magnetic materials are soft magnetic composites, sometimes referred to as powder cores, or soft ferrites. The electrically conductive elements are typically made of highly electrically conductive material such as copper or aluminum. In some embodiments, the replaceable tool 2 and the material 110 to be processed may be of similar material and might also absorb heat directly from the induction.

In another embodiment, such as that where resistive heating is used, at least a part (or subregion) of the replaceable tool 2 may comprise metallic alloys, such as those composed of one or more of nickel, chrome, iron, aluminium, tungsten, molybdenum, or tantalum; ceramic materials, such as silicon carbide, zirconium oxide; ceramic metals, such as molybdenum disilicide, lanthanum chromite; precious metals, such as platinum, or platinum rhodium alloys; graphite/carbon based materials; or combinations thereof. In an embodiment, resistive heating is used to generate heat, which may be achieved by, for example, using at least one wire.

In an embodiment, such as that where liquid heating is used, at least a part (or subregion) of the replaceable tool 2 may comprise materials configured to be heated by the liquid. The tool may be heated by welded, braced, or in other ways attached pipes on the back side of the tool, as well as through integrated channels, typically produced using additive manufacturing methods. Alternatively, the heating may be obtained by spraying the liquid directly onto the backside of the tool 2", as the liquid is substantially (preferably completely) contains within the second cavity 21 and is preferably not able to get in contact with the part or part surface of the first cavity 11.

The shape of the replaceable tool 2, represents the geometry of the part 3 to be formed, which can vary a lot and have complex shapes.

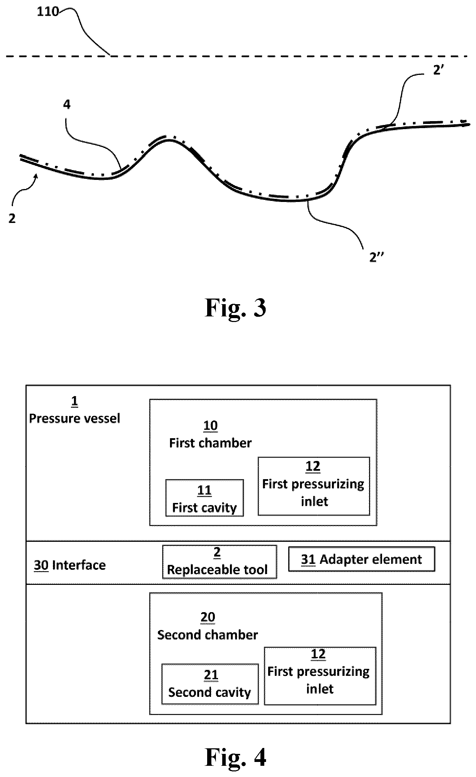

With reference to Fig. 3, the pressure vessel 1 may further comprise a membrane 4 (dashed lines), which is configured to cover at least a part of a forming side 2' of the replaceable tool 2. The word 'cover' is not to be interpreted in a way that the membrane 4 explicitly cover the entire forming side 2' of the replaceable tool 2. The membrane 4 is configured to receive a material 110 to be formed into a composite part 3. Preferably, the at least one vacuum duct 40 is arranged to draw vacuum between the membrane 4 and the replaceable tool 2. A vacuum pump may be used to draw vacuum.

In an embodiment, the pressure vessel comprises a sub-layer between the membrane 4 and the forming side 2' of the replaceable tool 2. Examples of such sub-layer may be a coal plate.

The membrane 4 may be flexible or rigid and may comprise of glass Fiber material, metal or plastic materials, such as polymers, including silicones, neoprene, nylon, polyester, polyphenylene sulphide, polyimide, rayon, polyurethan, polyvinyl chloride (PVC), biopolymers, polyethylene, poly tetra fluor ethylene PTFE, or natural polymers (e.g., rubber, latex, shellac). Preferably, the membrane comprises of silicones or latex. The membrane may be planar or molded. The membrane may also comprise of metals (e.g., stainless steel or aluminium) that are configured to be formed/adjusted into the necessary geometry. In some embodiments, the membrane has a thickness of 0.05 mm - 0.5 mm, but a more common range for polymer membranes is 2 - 5 mm, despite thicknesses up to 20 mm or more may have advantages in some applications.

With reference to Fig. 4, the pressure vessel 1 may further comprise an adapter element 31, which is configured to be arranged in the interface 30 between the first chamber 10 and the second chamber 20. In some examples, the adapter element 31 and the replaceable tool 2 are dividing the pressure vessel 1 into the first chamber 10 and the second chamber 20.

The pressure vessel 1 may also comprise a first outlet 14 (not shown) in the first chamber 10, which is configured to allow the pressurizing fluid to exit the first cavity 11. A second outlet 24 (not shown) may also be arranged in the second chamber 20, which may be configured to allow the pressurizing fluid to exit the second cavity 21.

The pressure vessel 1 may also comprise a coolant inlet 27 (not shown) in the second chamber 20, which may be configured to introduce a cooling media into the second cavity 21. Example of cooling media includes air, gas, water, or cryogenic media.

In an embodiment, the pressure vessel 1 comprises a drainage 28 (not shown) arranged in the second chamber 20 and configured to allow the cooling media to drain from the second cavity 21. The coolant inlet 27 and the drainage 28 may be connected to a coolant tank configured to pumping the cooling media into the second cavity 21 using, for example, a high-pressure pump, and configured to drain the cooling media out of the second cavity 21.

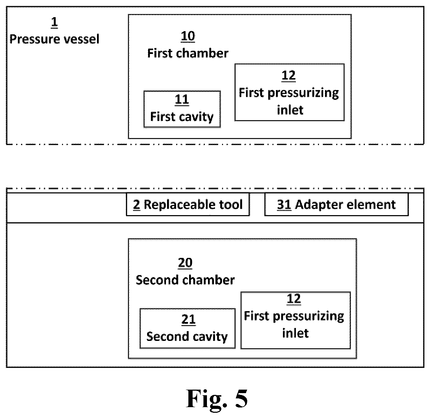

In a further embodiment, as illustrated in Fig. 5, the pressure vessel 1 is openable at the interface 30 between the first chamber 10 and the second chamber 20. As mentioned above, the pressure vessel is not necessarily openable at the interface 30 as long as it is openable in such a way as to allow the material 110 to be inserted (or charged) into the first chamber and/or for the composite part 3 to be taken out (or discharged) from the first chamber. The dashed lines represent the open surface. In other words, the pressure vessel 1 is configurable between an open and closed position. In some examples, the pressure vessel 1 is placed in an operative mode when it is in the closed position. In some examples, when the pressure vessel 1 is in the open position, the adapter element 31 and the replaceable tool 2 are in the lower part of the pressure vessel 1 comprising the second chamber 20. Preferably, the adapter element 31 is surrounding the replaceable tool 2, wherein the adapter element 31 and the replaceable tool 2 are configured to engage with each other at a contact surface of the adapter element 31. For example, the replaceable tool 2 may comprise at least one protrusion and the adapter element 31 comprises at least one groove configured to engage with said at least one protrusion, or vice versa.

The adapter element may be of similar or different material from that of the replaceable tool 2 and/or the membrane 4. In an embodiment, the adapter element comprises of glass fiber, metal or plastic material. In an example, the adapter element comprises a glass fiber material.

In an embodiment, the interface 30 comprises a receiving means 32 (not shown) configured to receive the replaceable tool 2 and/or the adapter element 31. Preferably, when the pressure vessel 1 is in the open position, then the receiving means 32 is in the upper part of the pressure vessel 1 comprising the first chamber 10. It is further preferred that the replaceable tool 2 and/or adapter element 31 is releasably connectable to said receiving means 32.

In a further embodiment, the first chamber 10 and the second chamber 20 comprise at least one inner rim 15, 25 (not shown), wherein the inner rim 15, 25 constitutes the receiving means 32 of the interface 30 between the first chamber 10 and the second chamber 20. In some examples, when both the inner rim 15 of the first chamber 10 and the adapter element 31 are present, then the inner rim 15 of the first chamber is configured to be in contact with the adapter element 31 when the pressure vessel 1 is in the closed position, such that the inner rim 15 engages with the adapter element 31 at a contact surface of the adapter element 31. In some examples, the inner rim 25 of the second chamber 20 is configured to be in contact with the adapter element 31 when the pressure vessel is in both open and closed positions. In some examples, the inner rim 25 of the second chamber 20 is engaging with the adapter element 31 at a contact surface of the inner rim 25. In some examples, when both the adapter element 31 and the inner rim 25 of the second chamber 20 are present, then at least one of said element and rim comprises a protrusion and the other comprises a corresponding receiving surface configured to engage with said protrusion. For example, the adapter element 31 may comprise at least one protrusion that is configured to engage with at least one groove in the inner rim 25 of the second chamber 20, or vice versa. The inner rim 15 of the first chamber 10 may be referred to as the first inner rim 15, and the inner rim 25 of the second chamber 20 may be referred to as the second inner rim 25.

In a yet embodiment, the pressure vessel 1 may further comprise at least one vacuum duct 40 (not shown) arranged in communication with the interface 30 between the first chamber 10 and the second chamber 20.

In some examples, the first cavity 11 of the first chamber 10 may be configured to be in fluidic contact with the membrane 4 covering the forming side 2' of the replaceable tool 2. The term fluidic contact refers to the ability of the fluids in the first cavity 11 may be in contact with the membrane 4.

In some examples, the second cavity 21 of the second chamber 20 may be in fluidic contact with the heat generating side 2'' of the replaceable tool 2, which is opposite to the forming side 2'.

In an embodiment, the first chamber 10 and the second chamber 20 are separable from each other at the interface 30 between the first chamber 10 and the second chamber 20. Advantages of separating said chambers 10, 20 from each other is rapid temperature increase, rapid temperature decrease and/or different applied pressure in each chamber.

At least one of the first chamber 10 and the second chamber 20 comprise an outer rim 16, 26 (not shown), wherein said outer rim 16, 26 are configured to provide a fluid-tight connection between the first chamber 10 and the second chamber 20 when the pressure vessel 1 is in the closed position. In some examples, when both the outer rim 16 and the outer rim 26 are present, then at least one of said rims 16, 26 comprises a protrusion and the other comprises a corresponding receiving surface configured to engage with said protrusion. For example, the outer rim 16 of the first chamber 10 may comprise a ridged pattern that engages with grooves in the outer rim 26 of the second chamber 26, or vice versa. The term fluid-tight connection refers to a connection where, within desired position(s), no fluids are contained/present.

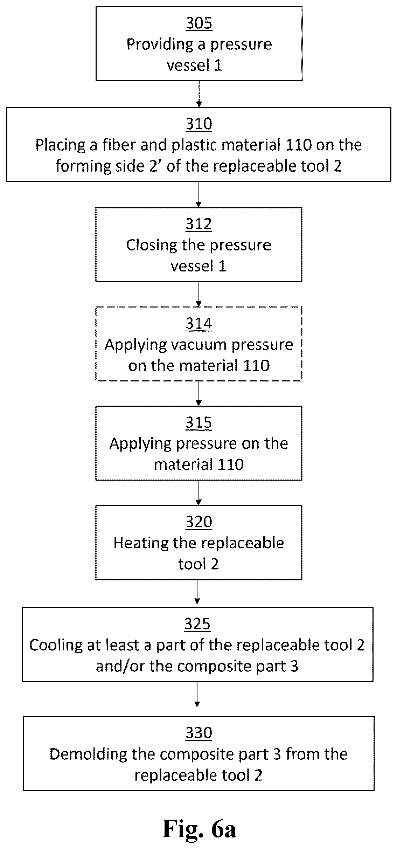

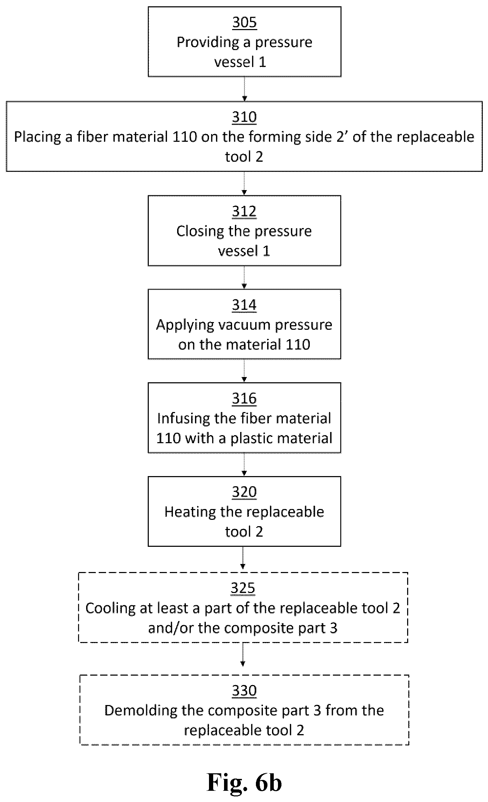

With reference to Figs. 6a and 6b, according to another aspect of the invention, a method of forming a composite part 3 is provided. The method comprises a step of providing 305 a pressure vessel 1 according to any of the embodiments described herein. Further the method comprises placing 310 a material 110 to be processed on the forming side 2', such as on membrane 4, of the replaceable tool 2. In some examples, the material 110 is a fiber and plastic material in the form of a pre-form with similar shape as the forming surface 2', easily put into the replaceable tool 2. In this case, where the plastic is already in the replaceable tool 2, the method further comprises closing 312 the pressure vessel 1 and applying 315 a consolidation pressure on the material 110 to be processed. The method also comprises a step of heating 320, the replaceable tool 2 containing the material 110 according to a pre-determined time-temperature profile to consolidate and/or cure the material 110 to form the composite part 3.

In an embodiment, before the step of applying a consolidation pressure on the material 110 to be processed, the method may further comprise a step of applying 314 vacuum, or near vacuum pressure on the material 110. Certain processes benefit from the reduced pressure, i.e. the vacuum pressure, on the material 110 to remove entrapped air and thereby enhance wet out of the matrix on the fibers during the forming process and thereby reduce the risk of dry-spots or voids in the formed composite part 3.

In the latter case, the step of applying 315 consolidation pressure on the material 110 often means drawing vacuum in the replaceable tool 2. In some cases, vacuum pressure is the same as consolidation pressure. In some cases, the consolidation pressure may be applied via the at least one vacuum duct 40 arranged in communication of the interface 30 between the first chamber 10 and the second chamber 20.

As mentioned above, the method which is described in relation to Fig. 6a further comprises heating 320 the replaceable tool 2 containing the material 110. The heating may be done according to a predetermined time-temperature profile to consolidate and/or cure the material 110 to produce the composite part 3. The replaceable tool 2 may be heated prior to, during and/or after the step 315 of applying pressure.

The replaceable tool 2 and the material 110 to be processed are held in this position in the replaceable tool 2 during a predetermined time period, typically to ensure sufficient temperature throughout the material 110 and a proper consolidation/wet out of the fiber composite material. In the case of a thermoset, the resin, or plastic material, must be sufficiently cured before demolding, while in the case of a thermoplastic, the part becomes solid after being cooled down. Thus, eventually, a cured or consolidated material 110 is provided and forms the composite part 3. There are a few applicable processes for the method, for example often referred to as compression molding, stamp forming, autoclave processing, out of autoclave processing, vacuum bagging, etc.

With reference to Fig. 6b, a method of forming a composite part 3 is provided. The method comprises a step of providing a pressure vessel 1 according to any of the embodiments described herein. Further, the method comprises placing a fiber material to be processed on the forming side 2', such as on the membrane 4, of the replaceable tool 2, closing 312 the pressure vessel 1, applying 314 a vacuum pressure and infusing 316 the fiber material with a plastic material, the plastic material thereby forming part of the material 110 to be processed.

In an embodiment, the method further comprises the step of infusing 316 the material 110 with a matrix material, such as a low viscosity resin of any type. The resin in this case may also be called a plastic material. The infusion can also be done using a higher pressure, up to several hundred bars, often referred to as resin transfer molding RTM, high pressure resin transfer molding HPRTM, vacuum assisted resin transfer molding VARTM etc.

The method also comprises a step of heating 320 the replaceable tool 2 according to a pre-determined time-temperature profile to form the composite part 3.

In an embodiment according to any one of the methods described herein, the steps of heating 320, and applying 315 pressure or infusing 316 the plastic material, on the replaceable tool 2 may occur simultaneously. In some examples, the heating may be done according to a predetermined time-temperature profile to produce the composite part 3. According to an embodiment, the replaceable tool 2 is heated by inductive heating, resistive heating and/or liquid heating which is in operative communication with a processing means. The replaceable tool 2 may be heated prior to, during and/or after the step of infusing the matrix material in the case of the method described in relation to Fig. 6b.

A warm replaceable tool 2 is typically beneficial to reduce the viscosity of the resin, but typically also starts a chemical reaction to cure the resin, so different aspects apply depending on the application and choice of material. In a preferred case, a proper wet-out of the fibers by the resin is obtained, without dry-spots or voids. In this method, the typical matrix is a thermoset resin and requires the matrix to be cured. Novel plastics are continuously being developed and the method may also be used with hybrid thermoset/thermoplastic matrixes and also low viscosity thermoplastics.

All methods described above may further comprise active or passive cooling 325 of at least a part of the replaceable tool 2 and/or the produced composite part 3 formed therein. Finally, the methods described further comprise demolding 330 the part 3 from the replaceable tool 2. In certain applications, the part 3 can be demolded at the processing temperature, which is beneficial from a cycle time perspective. Contrarily, a reduced demolding temperature is often beneficial from a part quality perspective. Optionally, a release agent is added to the replaceable tool 2 to facilitate separation of the formed composite part 3 from the replaceable tool 2.

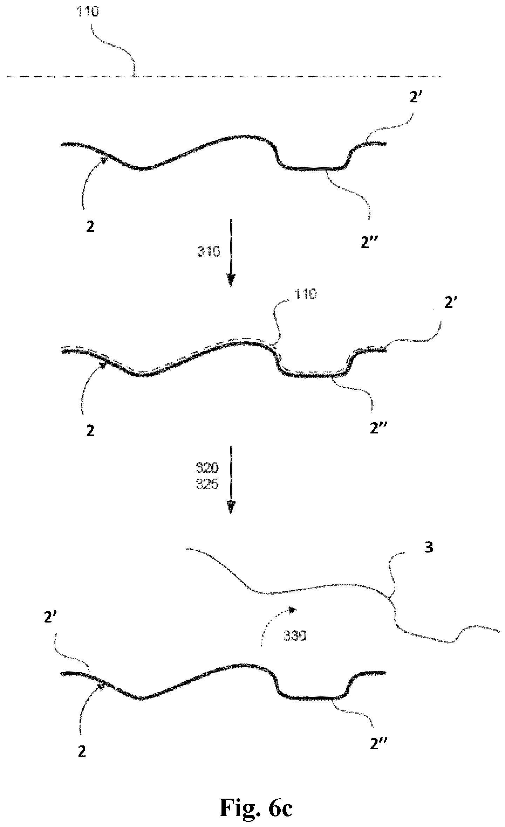

Part of the methods described above is illustrated in Fig. 6c. The material 110 to be processed, i.e. a mix of a fiber material and a polymeric material, or a fiber material which is to be infused with a resin, or a plastic material, during the forming process as described above, is arranged 310 in the replaceable tool 2. The fiber material may for instance be a carbon fiber or a flax fiber material. Preferably, the mix is in the shape of a pre-form, or a piece of a web. Alternatively, the replaceable tool 2 is arranged in a streamlined system where webs of material are fed into the replaceable tool 2 in steps. Before heating, the material 110 is shown in dashed lines. When the replaceable tool 2 is heated 320, the mix of fiber and polymeric material, i.e. the material 110 to be processed, is consolidated, or cured, to form a part 3 having a shape corresponding to that of the replaceable tool 2. After being cured or consolidated, the material 110 to be processed is shown as a solid line. Once the process temperature profile has been completed, the replaceable tool 2 is cooled down 325 and the part 3 is removed, or demolded, 330 from the replaceable tool 2. The shape of the part 3 may correspond to the contact surface of the replaceable tool 2.

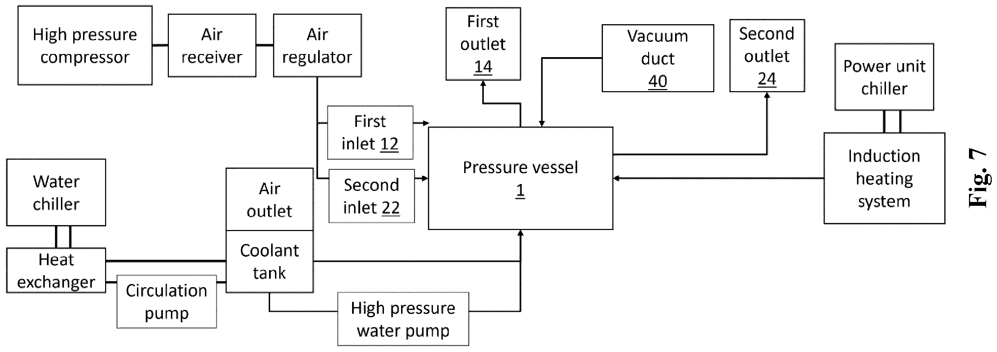

Moving on to Fig. 7, there is provided a system for forming a composite part 3 comprising a pressure vessel 1 according to an embodiment of the invention. In some examples, a vacuum pump, configured to draw vacuum, is connected to the at least one vacuum duct 40. In some examples, a heating system is connected to the replaceable tool 2, wherein the heating system may be connected to a power unit chiller. In an embodiment, the system comprises a high-pressure compressor which is connected to the first inlet 12 and/or the second inlet 22. In some examples, the high-pressure compressor is connected to an air receiver and/or an air regulator. The system further comprises a coolant tank, which is connected to the coolant inlet 27. In some examples, this coolant tank is connected to a high-pressure water pump that may aid in pumping the water into the pressure vessel. In some examples, the coolant tank is connected to the drainage 28. In some examples, the coolant tank is connected to a circulation pump, a heat exchanger and/or a coolant media chiller.

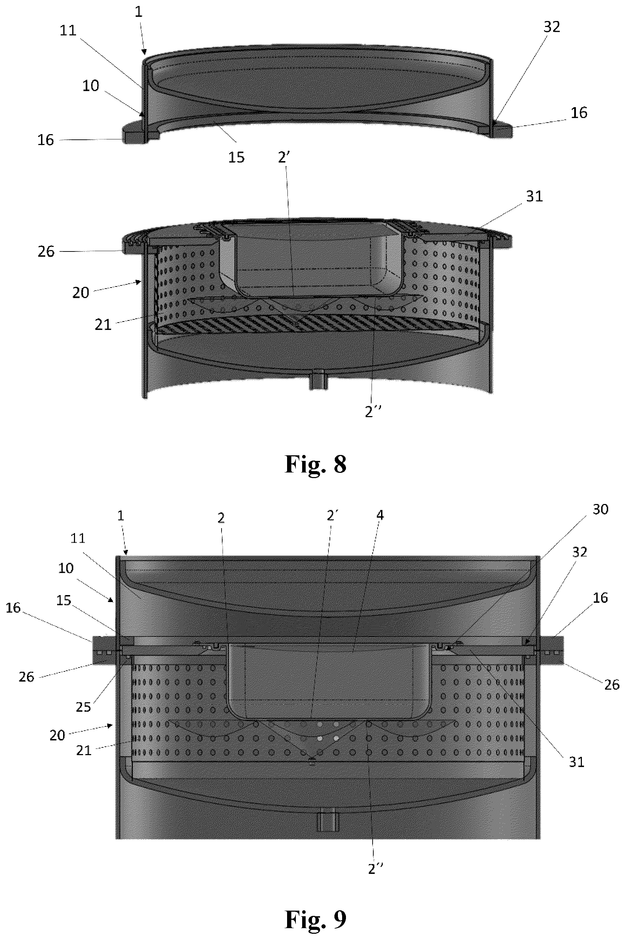

Moving on to Fig. 8 and Fig. 9, there is provided schematic cross views of a pressure vessel in the open or closed position, respectively, according to an embodiment of the invention.

In an embodiment, the pressure vessel 1 is of a curved geometry, preferably with some kind of flange, support ribs or frames to keep its shape and avoid too high stress levels from building up during pressurization and depressurization. The frame in the interface 30 between the cavities 11, 21 may comprise at least one groove for one or several seals configured to provide a gas-tight interface. The seal may comprise a polymer material, such as rubber, silicone, polyurethan, polyamide, poly tetra fluor ethylene, polyethylene, nylon, Teflon, polyvinyl chloride, polyethylene terephthalate, silicone rubber, polymethyl methacrylate, poly fluoroethylene, epoxy, PVC, elastomers, fibers, acrylic, cellulose, polycarbonate, thermoplastic, polystyrene, or combinations thereof. It may alternatively be a metal seal such as a copper or aluminium seal.

The opening and/or closing of the pressure vessel 1 is preferably performed using an actuator system, such as pneumatic or hydraulic pistons, linear electric motors or electric motors with a screw, such as a ball screw or trapezoidal screw and corresponding nut. It may alternatively be actuated by hand using counterweights or other arrangements. The pressure vessel 1 is preferably split in the vertical direction but may alternatively be opened through a horizontal movement or other angle.

The pressure vessel 1 may incorporate a locking system ensuring that it is maintained closed, wherein said locking system may withstand the force from the pressure in the cavity/cavities 11, 21. An example of such a system is a hydraulic system, where pistons pressurised with high-pressure oil is generating a compaction force larger than the force trying to open the cavity/cavities 11, 21. A more cost-effective solution, in particular for large cavities, may be using a locking mechanism which is configured to prevent the pressure vessel 1 from opening while pressurized and/or under pressure. Examples of such mechanisms include locking pins connected to a structure of at least one cavity and/or a frame comprising holes in the vessel part of the opposite cavity, where the pins, for example, may be moved to interlock within the corresponding locker holes. Alternatively, hooks may be used and moved to clamp around a frame of the opposite structural part. It may further be a rotating mechanism interlocking an opening movement, where the pressure in the cavity 11, 21 may prevent opening due to the increased friction forces between the rotating parts, but there are typically other features to prevent undesired opening of the lock while the system is pressurized.

It is to be understood that the apparatus and/or systems of the invention as described herein preferably fulfil the appropriate safety standards according to the technical field, including redundant safety systems, over pressure valves or other solutions to prevent too high pressure from building up. In a similar way, redundant safety solutions may be implemented to prevent a too large pressure difference from building up between the cavities 11, 21, where the tool 2 and/or adapter element 31 may be damaged.

The system according to the present invention may further benefit from at least one, such as numerous, sensors of same or different types and/or for same or different purposes on at least one location, including pressure sensors, temperature sensors, position sensors, safety switches, humidity sensor, etc. To ensure a reliable operation, it is preferred that the data from all such sensors is used, possibly in combination with appropriate methods (such as AI methods) configured to monitor the operation. Other activities to maintain a long service life of the apparatus and/or system of the invention includes lubrication points of guide rails, bearings, and so on.

In excess to the apparatus and/or system of the invention itself, numerous (such as at least one) accessories may be beneficial and/or required, including, for example, accumulators and/or compressors for pressurized gas, pressurized air dryer, chillers, circulation pumps, etc.

## Claims

1. A pressure vessel for incorporating a replaceable tool (2) for forming a composite part (3), the pressure vessel (1) comprising:
a first chamber (10) comprising a first cavity (11); and
a second chamber (20) comprising a second cavity (21);
wherein the first cavity (11) and the second cavity (21) are fluidly sealable with respect to each other at an interface (30) between the first chamber (10) and the second chamber (20); and
wherein the replaceable tool (2) is configured to be arranged in said interface (30); the pressure vessel (1) further comprising a first pressurizing inlet (12) arranged in the first chamber (10) and configured to pressurize the first cavity (11) with a first pressurizing fluid, and a second pressurizing inlet (22) arranged in the second chamber (20) and configured to pressurize the second cavity (21) with a second pressurizing fluid, wherein the pressure in the first chamber (10) is substantially the same as in the second chamber (20).

2. The pressure vessel according to claim 1, further comprising a first outlet (14) arranged in the first chamber (10) and configured to allow the pressurizing fluid to exit the first cavity (11), and a second outlet (24) arranged in the second chamber (20) and configured to allow the pressurizing fluid to exit the second cavity (21).

3. The pressure vessel according to any one of claims 1 or 2, further comprising a coolant inlet (27) arranged in the second chamber (20) and configured to introduce a cooling media into the second cavity (21).

4. The pressure vessel according to claim 3, further comprising a drainage (28) arranged in the second chamber (20) and configured to allow the cooling media to drain from the second cavity (21).

5. The pressure vessel according to any one of the preceding claims, further comprising an adapter element (31) configured to be arranged in the interface (30) between the first chamber (10) and the second chamber (20).

6. The pressure vessel according to claim 5, wherein the interface (30) comprises a receiving means (32) configured to receive the replaceable tool (2) and/or the adapter element (31).

7. The pressure vessel according to claim 5 or 6, wherein the replaceable tool (2) and/or the adapter element (31) is releasably connectable to said receiving means (32).

8. The pressure vessel according to claim 6 or 7, wherein at least one of the first chamber (10) and the second chamber (20) comprises an inner rim (15, 25), wherein the inner rim (15, 25) constitutes the receiving means (32) of the interface (30) between the first chamber (10) and the second chamber (20).

9. The pressure vessel according to any one of the preceding claims, further comprising at least one vacuum duct (40) arranged in communication with the interface (30) between the first chamber (10) and the second chamber (20).

10. The pressure vessel according to any one of the preceding claims, further comprising a membrane (4) configured to cover at least parts of a forming side (2') of the replaceable tool (2) which is configured to receive a material to be formed into a composite part (3).

11. The pressure vessel according to claim 9 and 10, wherein the at least one vacuum duct (40) is arranged to draw vacuum between the membrane (4) and the replaceable tool (2).

12. The pressure vessel according to claim 10 or 11, wherein the first cavity (11) of the first chamber (10) is configured to be in fluidic contact with the membrane (4) covering at least parts of the forming side (2') of the replaceable tool (2) which is configured to receive material to be formed into a composite part (3).

13. The pressure vessel according to any one of the preceding claims, wherein the second chamber (20) is in fluidic contact with a heat generating side (2") of the replaceable tool (2), which is opposite to the forming side (2') of the replaceable tool (2) which is configured to receive material to be formed.

14. The pressure vessel according to any one of the preceding claims, wherein the pressure vessel (1) is openable at the interface (30) between the first chamber (10) and the second chamber (20).

15. The pressure vessel according to any one of the preceding claims, wherein the pressure vessel (1) is configurable between an open position and a closed position.

16. The pressure vessel according to any one of the preceding claims, wherein the first chamber (10) and the second chamber (20) are separable from each other at the interface (30) between the first chamber (10) and the second chamber (20).

17. The pressure vessel according to any one of the preceding claims, wherein at least one of the first chamber (10) and the second chamber (20) comprises an outer rim (16, 26), said outer rim (16, 26) being configured to provide a fluid-tight connection between the first chamber (10) and second chamber (20) when the pressure vessel is in the closed position.

18. A method for forming a composite part (3), comprising:
providing (305) a pressure vessel (1) according to any one of claims 1 to 17;
placing (310) a fiber and plastic material (110) on the forming side (2') of the replaceable tool (2);
closing (312) the pressure vessel (1);
applying (314) vacuum pressure on the material (110),
applying (315) a consolidated pressure on the material (110) to be processed;
and
heating (320) the replaceable tool (2) containing the material (110) according to a predetermined time-temperature profile to consolidate and/or cure the material (110) to form the composite part (3).

19. A method for forming a composite part (3), comprising:
providing (305) a pressure vessel (1) according to any one of claims 1 to 17;
placing (310) a fiber material (110) to be processed on the forming side (2') of the replaceable tool (2);
closing (312) the pressure vessel (1);
applying (314) a vacuum pressure and infusing (316) the fiber material with a plastic material, the plastic material thereby forming part of the material (110) to be processed;
heating (320) the replaceable tool (2) containing the material (110) according to a predetermined time-temperature profile to consolidate and/or cure the material (110) to form the composite part (3).

20. The method according to claims 18 or 19, wherein the method further comprises:
cooling (325) at least a part of the replaceable tool (2) and/or the formed composite part (3); and
demolding (330) the composite part (3) from the replaceable tool (2).
